# EUROPÄISCHE PATENTSCHRIFT

(11) **EP 3 303 753 B1**
(45) Veröffentlichungstag und Bekanntmachung des Hinweises auf die Patenterteilung: **12.11.2025**
(21) Anmeldenummer: 16732937.4
(22) Anmeldetag: 27.05.2016
(51) Int. Cl.: E21B 7/04, E21B 7/20, E21B 7/28, F16L 1/028

(54) **SYSTEM UND VERFAHREN ZUM OBERFLÄCHENNAHEN VERLEGEN VON ERDKABELN ODER ERDLEITUNGEN IM BODEN**
SYSTEM AND METHOD FOR LAYING UNDERGROUND CABLES OR UNDERGROUND LINES IN THE GROUND NEAR THE SURFACE
SYSTÈME ET PROCÉDÉ DE POSE PRÈS DE LA SURFACE DE CÂBLES SOUTERRAINS OU DE CONDUITES SOUTERRAINES DANS LE SOL

(30) Priorität: 29.05.2015 DE 102015108576
(43) Veröffentlichungstag der Anmeldung: 11.04.2018
(73) Patentinhaber: Herrenknecht AG, 77963 Schwanau (DE)
(72) Erfinder: PETERS, Marc, 79108 Freiburg (DE); ENGEL, Tobias, 79194 Gundelfingen (DE); GERHARDT, Tobias, 79331 Teningen (DE); PRAETORIUS, Steffen, 77963 Schwanau (DE)
(74) Vertreter: Klickow & Wetzel PartGmbB
(86) Internationale Anmeldenummer: PCT/EP2016/000877
(87) Internationale Veröffentlichungsnummer: WO 2016/192844

(56) Entgegenhaltungen:
- DE-A1- 102012 217 822
- DE-A1- 102013 111 350
- DE-A1- 4 142 343
- DE-B3- 10 356 696
- US-A- 4 221 503
- US-A- 4 784 230
- US-A1- 2011 005 838

## Beschreibung

Die Erfindung betrifft ein System zum oberflächennahen Verlegen von Erdkabeln oder Erdleitungen im Boden in einem Bohrloch entlang einer Verlegetrasse zwischen einem Startpunkt und einem Zielpunkt mit einem Bohrgerät, mit einem Vortriebskopf zum Erstellen des Bohrloches, mit einem Bohrgestänge und/oder einem Casing und ein Verfahren zum oberflächennahen Verlegen von Erdkabeln oder Erdleitungen im Boden in einem Bohrloch entlang einer Verlegetrasse zwischen einem Startpunkt und einem Zielpunkt bei dem ein Vortriebskopf entlang der Verlegetrasse bewegt wird, indem mit einem Bohrgerät ein Vorschub oder ein Vorschub und eine Rotation über ein Bohrgestänge übertragen wird.

Bei der Errichtung eines Stromnetzes beispielsweise bei der Erstellung einer 380 kV-Leitung ist es neben der Erstellung von Überlandleitungen auch notwendig, diese Leitungen im Boden zu verlegen.

Bei einer oberflächennahen Verlegung von Erdkabeln kommt die offene Grabenbauweise zum Einsatz. Dies führt zum Teil zu erheblichen Umwelteingriffen entlang der Trasse und ist mit einem nicht zu unterschätzenden Aufwand beim Grabenaushub und bei der Grabenwiederverfüllung verbunden. Für die Erstellung einer 380 kV Kabeltrasse sind beispielsweise zwei Grabenprofile mit jeweils 5,5 m Breite und 2,15 m Tiefe zu erstellen Als besonders aufwendig hat sich die Trennung der einzelnen Bodenschichten herausgestellt, die mehrere getrennte Mieten erforderlich macht. Dies ist notwendig, um bei der späteren Rückverfüllung des Grabens die Bodenqualität wieder in den ursprünglichen Zustand zurückzuversetzen. Des Weiteren ist während der Bauarbeiten eine Baubedarfsfläche von ca. 40 m freizuhalten während nach dem Abschluss der Bauarbeiten ein Kabelschutzstreifen von ca. 23 m zugängliche gehalten werden muss. Diese sehr aufwendigen Eingriffe während der Bauphase und Auswirkungen nach Abschluss der Arbeiten im Rahmen der offenen Verlegung begründen die Notwendigkeit der Entwicklung einer bedarfsgerechten unterirdischen Verlegemethode.

Um weiterhin die Eingriffe in die Natur während der Bauphase und die Errichtungskosten gering zu halten, ist es notwendig große Haltungslängen bei der grabenlosen Verlegung zu erreichen. Hierbei sind Haltungslängen von bis zu 1500 m anzustreben. Problematisch bei der oberflächennahen Verlegung ist die geringe Überdeckung der Leitung (beispielsweise lediglich 2 bis 6 m). Der Durchmesser der hier zu verlegenen Leitungen bewegt sich in einem Bereich kleiner 800, teilweise sogar kleiner 300 mm.

Es stehen bereits grabenlose Bohrverfahren aus dem Pipelinebau zur Verfügung. (Microtunneling, HDD-Drilling) allerdings ist es nicht möglich, mit diesen Verfahren die notwendigen Parameter abzudecken.

So existieren bereits Bohrverfahren, die den gewünschten Durchmesserbereich verlegen können, allerdings sind diese Verfahren aus technischen Gründen auf wesentlich kürzere Streckenlängen limitiert. Hierbei handelt es sich beispielsweise um die Microtunnelbohrtechnik bis 300 mm. Für eine Haltungslänge von bis zu mehr als 1,5 km müsste derzeit noch auf eine Microtunnelbohrtechnik mit einem Durchmesser von ca. 1000 mm zurückgegriffen werden. Allerdings erhöhen sich der Platzbedarf der Baustelleneinrichtung und die Kosten mit zunehmendem Durchmesser signifikant. Daher ist diese Technik nicht einsetzbar.

Mit dem Horizontal Directional Drilling (HDD)-Verfahren wäre eine Verlegung bezüglich der Anforderungen für den Durchmesser und die Streckenlänge denkbar. Dieses Verfahren kommt bereits speziell bei der Unterquerung von Flussläufen oder Straßen zum Einsatz. Bei diesem Verfahren wird zunächst eine Pilotbohrung unter Verwendung eines rotierenden Bohrkopfes und Bohrgestänges vom Startpunkt in Richtung Zielpunkt erstellt. Die Lagegenauigkeit wird dabei durch ein Vermessungssystem sichergestellt, welches hinter dem Bohrkopf angebracht ist. Das abgebaute Material wird mit einer Bentonitsuspension zu Tage gefördert. Die Bentonitsuspension wird durch das Bohrgestänge direkt zu den am Bohrkopf angebrachten Düsen gepumpt. Die Suspension vermischt sich mit dem gelösten Boden und fließt durch den Ringraum zwischen Bohrgestänge und Boden zum Startpunkt zurück. Für einen sauberen Austrag des gelösten Bodens sind allerdings hohe Spülungsdrücke erforderlich. Um einen unerwünschten Spülungsaustritt an der Oberfläche zu verhindern, sind beim HDD-Verfahren aber in diesem Fall möglichst große Verlegetiefen und damit Überdeckungen beispielsweise von mehr als 30m erforderlich. Verlegetiefen im Bereich kleiner 10 m kann bei bestimmten Bodenbeschaffenheiten zu unerwünschten Spülungsaustritten beim herkömmlichen HDD-Verfahren führen.

Solche Verfahren und die dazugehörige Technik sind unter anderem aus DE 10 2012 217 822 A1 und US 4 784 230 A bekannt.

Aufgabe der Erfindung ist, ein System und ein Verfahren zum oberflächennahen Verlegen von Erdkabeln oder Erdleitungen im Boden bereitzustellen, mit dem die zuvor beschriebenen Nachteile überwunden werden können und es möglich ist, Erdkabel oder Erdleitungen oberflächennah mit Haltungslängen von bis zu 1500 m zu verlegen.

Gelöst wird die erfindungsgemäße Aufgabe durch ein System gemäß Anspruch 1 und ein Verfahren gemäß Anspruch 7.

Der wesentliche Vorteil des Systems ist, dass im Vergleich zu den bekannten Verlegeverfahren ein relativ kleiner Flächenbedarf im Bereich der Baustelleneinrichtung erforderlich ist. Es ist lediglich ein punktueller Eingriff in die Landschaft an Start- und Zielpunkten. An den Start- und Zielpunkten ist es wegen der begrenzten Transportfähigkeit der Kabel am Stück notwendig ein Koppel- oder Muffenbauwerk zu erstellen, so dass somit der Eingriff weiter reduziert wird. Des Weiteren ist entlang der Trasse kein baulicher Eingriff in die Umwelt von Nöten, wodurch eine besonders umweltverträgliche Verlegung von Erdkabeln ermöglicht wird. Beispielsweise entfällt der Einsatz von schwerem Gerät zwischen Start- und Zielpunkt. Bodenschichtungen gerade im Hinblick auf eine landwirtschaftliche Nutzung werden nicht verändert, so dass nach Abschluss der Arbeiten unveränderte Pflanzung und Wachstum erfolgen kann. durch das unterirdische Verlegen gibt es keine optische Beeinträchtigung der Landschaft im Gegensatz zur Freileitung. Gleichzeitig ist es aufgrund der geringen Überdeckung möglich, die Leitungen im Servicefall schnell zu erreichen.

Eine weitere Lösung der Erfindung sieht vor, dass es sich bei dem Bohrwerkzeugsantrieb um einen Elektromotor oder um einen Mudmotor handelt. Hierdurch wird sicher und einfach ein Antrieb eines Bohrkopfs ohne Rotation des Bohrgestänges möglich. Der Mudmotor kann darüber hinaus besonders einfach und sicher betrieben werden, wenn die Antriebsflüssigkeit in einem geschlossenen System oder in ein quasi geschlossenes System bereitgestellt wird. Quasigeschlossen ist ein System, bei dem eine geringe Mende an Flüssigkeit kontrolliert abgegeben wird, um eine Schmierung bereitzustellen. Alternativ ist auch ein Antrieb mit einem Bohrgestänge möglich.

Eine weitere Lösung der Erfindung sieht vor, dass es sich bei dem Bohrgerät um ein Bohrgerät einer HDD-Bohranlage oder um eine Vorschubeinheit handelt. Hierbei handelt es sich um eine verhältnismäßig kleine Bohranlage, die leicht beweglich bzw. verfahrbar ist, und die daher keine nennenswerte Belastung beim Verfahren zwischen den einzelnen Ansatzpunkten darstellt.

Eine weitere Lösung der Erfindung sieht vor, dass ein Spülungskreislauf vorgesehen ist, mit dem der der Vortriebskopf antreibbar und/oder steuerbar ist.

Eine weitere Lösung der Erfindung sieht vor, dass ein Steuerelement zur horizontalen oder vertikalen Steuerung vorgesehen ist Eine weitere Lösung der Erfindung sieht vor, dass das Bohrgestänge doppelwandig ausgeführt ist und ein Bestandteil eines Spülungsflüssigkeitskreislaufs ist, oder dass das Innere des Bohrgestänges und der Ringraum zwischen Casing und Bohrgestänge Bestandteile eines Spülungsflüssigkeitskreislaufs sind.

Eine weitere Lösung der Erfindung sieht vor, dass wenigstens ein Abgabepunkt zur Abgabe von Spülungsflüssigkeit, als Schmierung vorgesehen ist. Eine weitere Lösung der Erfindung sieht vor, dass es sich bei der Schmierung um eine stationäre Schmierung handelt.

Eine weitere Lösung der Erfindung sieht vor, dass in einem zweiten Bohrdurchgang ein Aufweitungsbohrkopf mit dem Bohrgestänge und/oder Casing verbindbar ist.

Eine weitere Lösung der Erfindung sieht vor, dass es sich bei dem Aufweitungsbohrkopf um einen Bohrhammer zum Verdrängen des Bodens, eine Bodenverdrängungsschnecke, bevorzugt mit einem Bohrwerkzeugsantrieb zum Verdrängen des Bodens, oder um ein Bohrkopfsystem aus Bohrwerkzeug und Bohrwerkzeugsantrieb zum Lösen des Bodens handelt.

Die Erfindung sieht vor, dass in das Bohrloch ein Schutzrohr einbringbar ist, während oder bevor das Bohrgestänge und/oder Casing aus dem Bohrloch entnommen wird, in das die Erdkabel oder Erdleitungen eingebracht werden.

Eine weitere Lösung der Erfindung sieht vor, dass das Schutzrohr aus einem Schlauch, aus Flachmaterial, bevorzugt aus Kunststoff, oder aus Rohrschüssen, bevorzugt aus Kunststoff, vor Ort erstellbar ist.

Eine weitere Lösung der Erfindung sieht vor, dass mit einem Bohrgerät ein Vorschub über ein Casing auf den Bohrkopf übertragen wird.

Eine weitere Lösung der Erfindung sieht vor, dass ein Spülungskreislauf für ein Spülungsmedium, bevorzugt Bentonit, vorgesehen wird, über den der Vortriebskopf angetrieben und/oder gesteuert wird und/oder durch den der gelöste Boden aus dem Bohrloch abgefördert wird, wobei die Zufuhr und die Abfuhr des Spülungsmediums im Spülungskreislauf bevorzugt über ein doppelwandig ausgeführtes Bohrgestänge oder über das Innere des Bohrgestänges und den Ringraum zwischen Casing und Bohrgestänge erfolgt.

Anschließend wird das erfindungsgemäße Verfahren und das erfindungsgemäß System anhand eines bevorzugten Ausführungsbeispiels in Verbindung mit einer Zeichnung näher erläutert. Dabei zeigen:
- Fig. 1: eine schematische Darstellung eines Verfahrens und eines Systems mit einem Bohrhammer,
- Fig. 2: eine Darstellung analog Figur 1 mit einer Verdrängungsschnecke,
- Fig. 3, 4 5: schematische Darstellungen von Verdrängungsbohrköpfen,
- Fig. 5: eine schematische Darstellung eines Spülungsbohrkopfes,
- Fig. 6, 7: eine schematische Darstellung des Einziehens von Erdkabeln in das Bohrloch,
- Fig. 8 bis 18: schematische Darstellungen des Einbringens eines Schutzrohres in das Bohrloch.

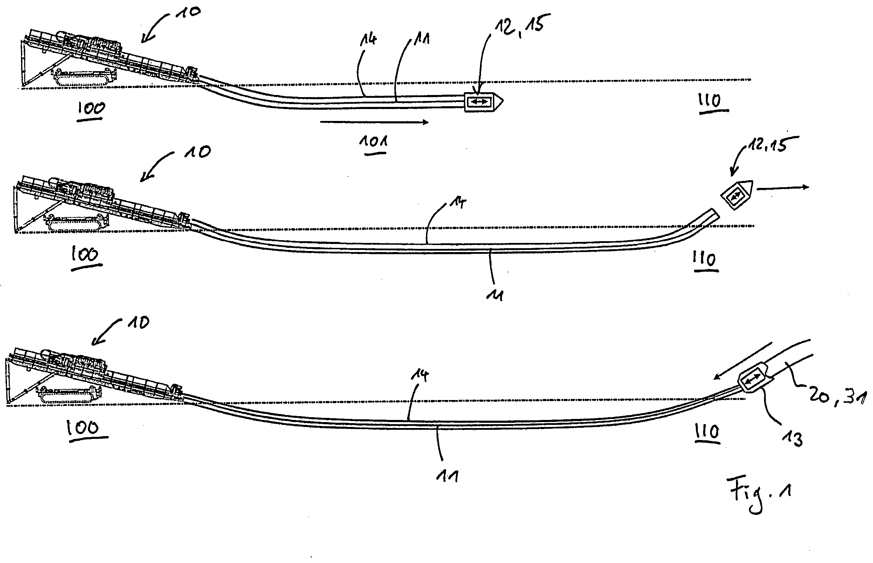

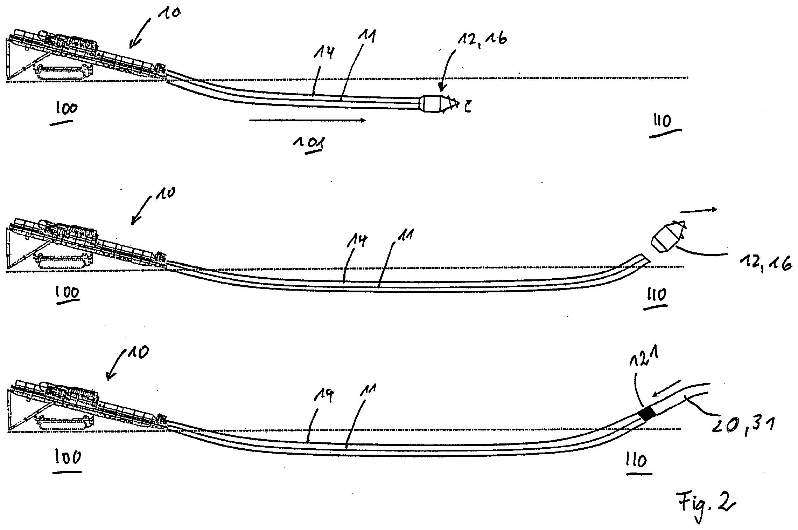

An einem Startpunkt 100 wird ein HDD-Bohrgerät 10 installiert (Fig. 1, Fig. 2) und über ein Bohrgestänge 11 mit dem Vortriebskopf 12 verbunden. Weiterhin wird ein Casing 14 bereitgestellt, das das Bohrgestänge 11 umgibt. Mit Hilfe des durch das Bohrgerät 10 bereitgestellten Drehmoments und der Vorschubkraft wird der Vortriebskopf 12 entlang der vorgegebenen Trasse 101 Richtung Zielpunkt 110 geschoben.

In Fig. 1 ist als Vortriebskopf 12 ein Bohrhammer 15 dargestellt und eingesetzt. Der Vorschub erfolgt hierbei über das Casing 14. Das Bohrgestänge 11 dient zur Spülungszufuhr für den Antrieb des Bohrhammers 15 und zur Rotation des Bohrhammers 15, beispielsweise zur Steuerung.

In Fig. 2. ist als Vortriebskopf 12 eine Verdrängungsschnecke 16 vorgesehen. Der Vorschub erfolgt hierbei über das Casing 14. Das Bohrgestänge 11 dient zur Rotation der Verdrängungsschnecke 16. Diese kann über die Spülungszufuhr gesteuert werden. Alternativ kann die Verdrängungsschnecke 16 auch mit einem im Vortriebskopf 12 vorgesehenen Motor (nicht dargestellt) angetrieben werden. Dann dient die Spülungszufuhr zum Antrieb des Motors.

Nach Durchstich des Vortriebskopfes 12 am Zielpunkt 110 wird dieser demontiert. Im Anschluss wird das Bohrgestänge 11 am Zielpunkt mit einem Schutzrohr 20 beispielsweise aus Kunststoff verbunden und über das Bohrgerät 10 bei Rückzug des Bohrgestänges 11 und/oder des Casings 14 eingezogen. Die Verbindung in Fig. 2 erfolgt über ein Verbindungselement 21.

Alternativ kann das Casing 14 auch mit dem Schutzrohr 20, beispielsweise aus Polymerbeton oder einem druckfesten Kunststoff, wie beispielsweise GFK, aus dem Bohrloch 102 hinausgeschoben werden, indem das Schutzrohr 20 in das Bohrloch 102 eingebracht wird. Hierbei müssen die Casings 14 nicht zugfest miteinander verbunden sein.

Zwischen dem Bohrgestänge 11 und dem Schutzrohr 20 kann, wie in Fig.1 gezeigt, ein Aufweitungsbohrkopf 13 vorgesehen sein. Während des Einzugs des Schutzrohres 20 wird dieses beispielsweise mit Mörtel, Bentonitspülung oder Flüssigboden hohlraumfrei an den Baugrund angebunden. Der Einzug der Erdkabel 30 erfolgt nach Fertigstellung der Schutzverrohrung 31 oder direkt in das Bohrloch, falls keine Schutzverrohrung 31 vorgesehen ist.

Alternativ kann als Start- und Zielpunkt 100, 110 auch ein Start- bzw. Zielgrube (nicht dargestellt) vorgesehen werden.

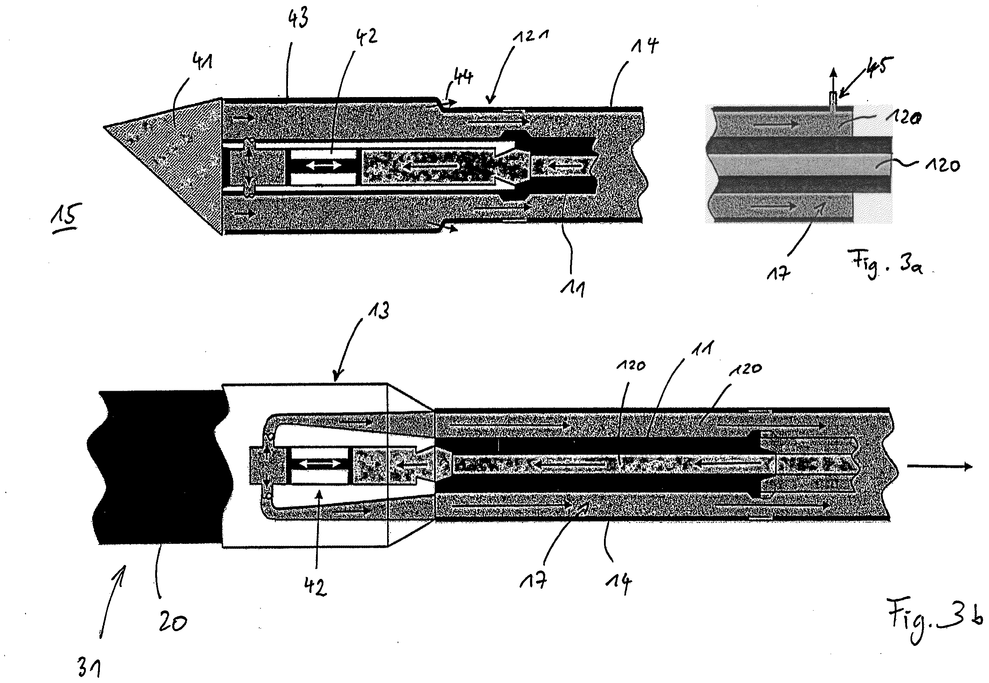

Fig. 3a zeigt eine schematische Schnittansicht eines Bohrhammers 15, der an ein Bohrgestänge 11 und ein Casing 14 angeschlossen ist. Der Bohrhammer 15 weist an seinem vorderen Ende einen Verdrängungskopf 41 auf. Dieser ist mit einem Hammerelement 42 verbunden und im Bohrkopfabschnitt 43 gelagert. Weiterhin ist der Bohrhammer 15 mit dem Casing 14 verbunden. Über das Bohrgestänge 11 wird Bohrspülung 120 dem Hammerelement 42 zugeführt, um dieses anzutreiben. Der asymmetrisch gestaltete Verdrängungskopf 41 überträgt dabei die Schläge auf dem Boden, sodass die Bodenstruktur aufgelöst wird und der Bohrhammer 15 über den Vorschub, der auf ihn durch das Casing 14 übertragen wird, im Bohrloch fortbewegt wird. Hinter dem Bohrkopfabschnitt 43 sind Auslassdüsen 44 vorgesehen, an denen Spülung 120 in einen Ringraum 121 abgegeben wird, um im Ringraum 121 eine Schmierung bereitzustellen, damit die Reibung zwischen Casing reduziert wird. Zusätzlich kann das Casing 14 Schmiermittelauslässe 45 vorsehen, über die ebenfalls Spülung 120 in den Ringraum 121 als Nachschmierung abgegeben werden kann.

Fig. 3b zeigt einen Aufweitungsbohrkopf 13. Dieser ist an das Schutzrohr 20 und an das Casing 14 sowie an das Bohrgestänge 11 angeschlossen und wird mit Spülung 120 versorgt. Der Aufweitungsbohrkopf 13 ist hier mit einem Hammerelement 42 versehen, das analog dem zuvor beschriebenen wirkt. Es wird über das Bohrgestänge mit Spülung als Antrieb versorgt. Die vom Hammerelement 42 abgegebene Spülung fließt über das Casing 14 bzw. über den Zwischenraum 17 zwischen Casing 14 und Bohrgestänge 11 zurück zum Bohrgerät 10. Ein Rotierendes Element oder auch eine Bodenentnahme über ein Bohrwerkzeug wäre alternativ ebenfalls möglich.

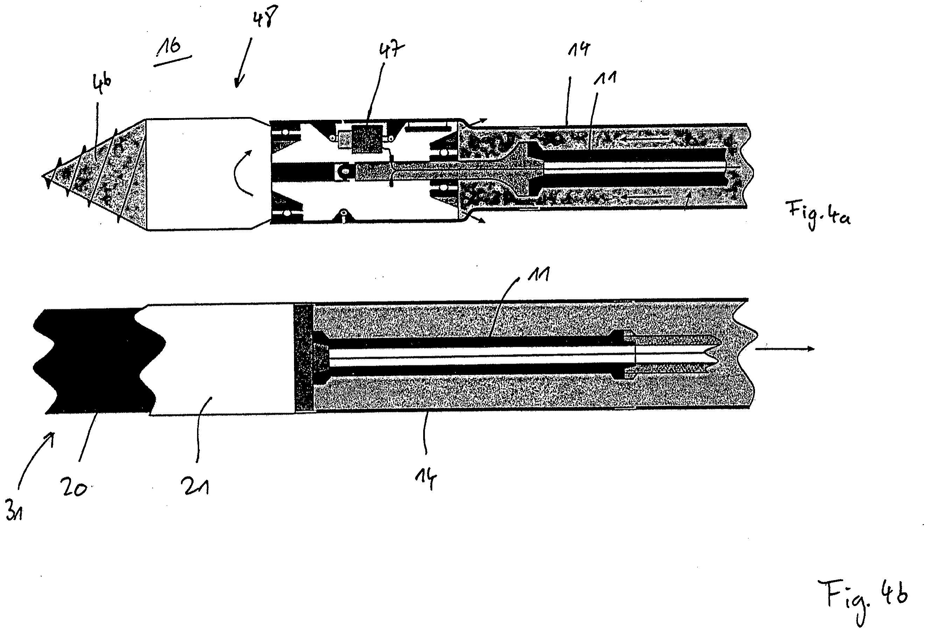

Fig. 4a zeigt eine schematische Schnittansicht einer Verdrängungsschnecke 16, die an ein Bohrgestänge 11 und ein Casing 14 angeschlossen ist. Die Verdrängungsschnecke 16 weist an Ihrem vorderen Ende einen Rotationkopf 46, durch dessen Rotation der anstehende Boden verdrängt wird, auf. Die Verdrängungsschnecke 16 wird über den Vorschub, der auf sie durch das Casing 14 übertragen wird, im Bohrloch fortbewegt. Die Verdrängungsschnecke 16 weist dabei einen Steuerelement 47 auf, bei dem es sich um einen Hydraulikzylinder oder Ähnlichem handelt, durch dessen Betätigung die Richtung durch Verkippen des vorderen Abschnitts 48 änderbar ist.

Fig. 4b zeigt, wie ein Schutzrohr 20 bzw. die Schutzverrohrung 31 über ein Verbindungselement 21 mit dem Casing 14 und dem Bohrgestänge 11 verbunden ist, ohne dass ein Aufweitungsbohrkopf 13 vorgesehen ist.

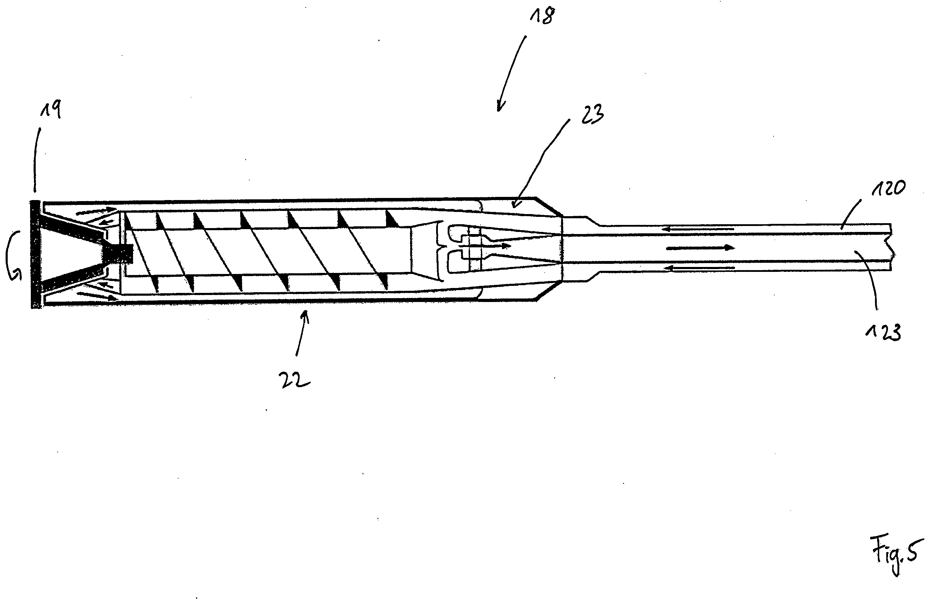

Fig. 5 zeigt eine schematische Schnittansicht eines Bohrkopfsystems 18 bestehend aus einem Bohrwerkzeug 19 zum Lösen des anstehenden Bodens, einem Bohrwerkzeugsantrieb 22 zur Rotation des Bohrwerkzeug 19 und einer Strahlpumpe 23 zur Abförderung des Gemisch 123 aus Spülflüssigkeit 120 und gelöstem Boden. Auch hier können Auslassdüsen 44, 45 vorgesehen werden.

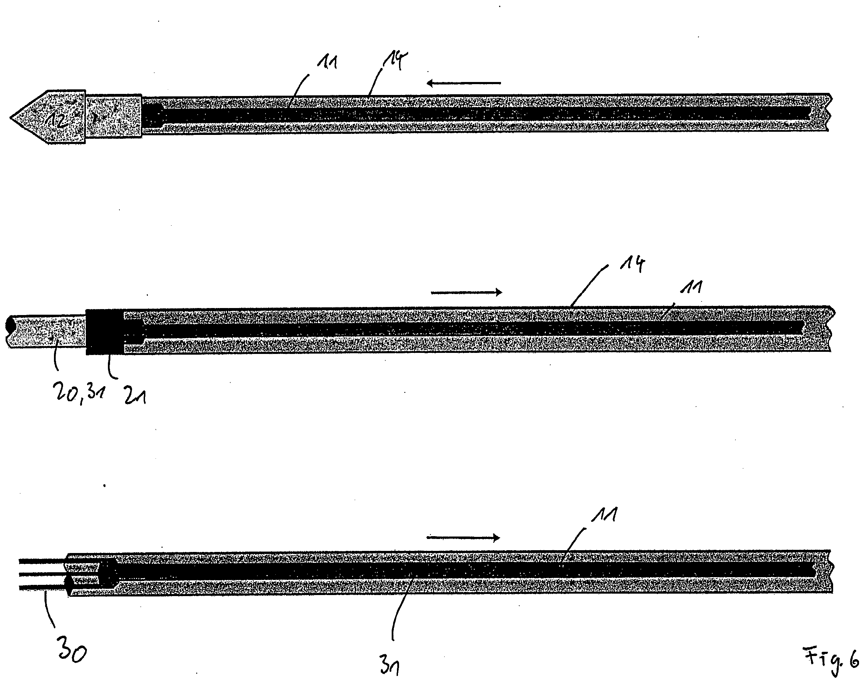

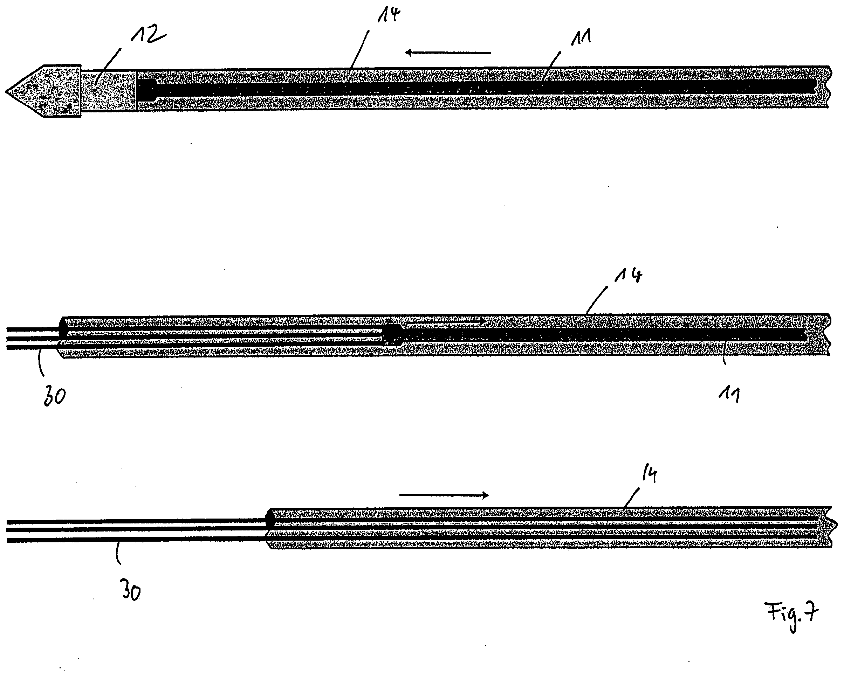

Fig. 6 und Fig. 7 zeigen schematisch das Einziehen der Erdkabel 30 in das Bohrloch entweder in die Schutzverrohrung 31 (Fig. 6) oder direkt in den Boden (Fig. 7). Dabei wird im oberen Teil jeweils das Erstellen des Bohrlochs mit Vortriebskopf 12, Casing 14 und Bohrgestänge 11 wie zuvor beschrieben gezeigt.

In der Mitte wird in Fig. 6 das Einziehen der Schutzverrohrung 31 in das Bohrloch durch Herausziehen oder Herausschieben des Casings 14 und des Bohrgestänges 11 oder nur des Casings 14 dargestellt. Anschließend werden unten in Fig. 6 die Erdkabel 30 eingezogen, indem sie entweder an einem Zugseil (nicht dargestellt), das mit der Schutzverrohrung 31 eingebracht wurde, eingezogen oder über das Bohrgestänge 11, das im Bohrloch verbleibt, während die Schutzverrohung durch Ziehen oder Herausschieben des Casings 14 in das Bohrloch eingebracht wird.

**In** der Mitte wird in Fig. 7 das Einziehen der Erdkabel 30 in das Casing 14 durch Ziehen oder alternativ Herausschieben des Bohrgestänges 11 gezeigt. Im unteren Abschnitt ist dann dargestellt, wie das Casing 14 anschließend nach Einbringen der Erdkabel 30 aus dem Bohrloch herausgezogen wird.

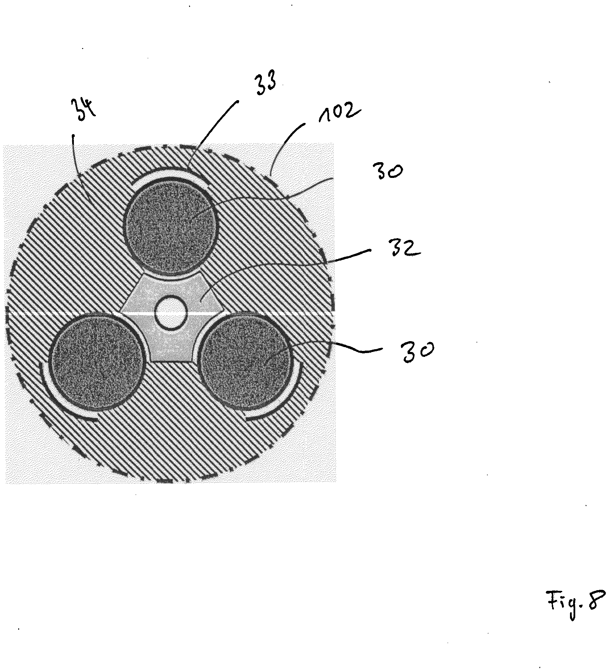

**In** den Fig. 8 bis 18 wird gezeigt, wie die Schutzverrohrung zur Verlegung bereitgestellt wird, bzw. wie die Erdkabel in die Bohrung eingebracht werden können. Wichtig hierbei ist, dass beispielsweise bei stromführenden Erdkabeln 30 eine adäquate Wärmeübertragung gewährleistet wird sowohl bei direkter Verlegung im Boden als auch bei einer Verlegung in einer Schutzverrohrung 31.

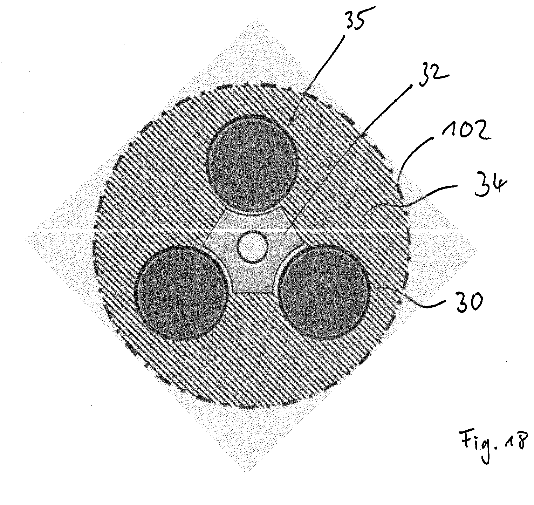

Ein direktes Verlegen im Boden ist in Fig.8 und Fig. 18 gezeigt. Die Erdkabel 30 sind beispielsweise über Abstandshalter 32 zu einem Paket angeordnet, dass in das Bohrloch 102 eingezogen wird. Als Schutz sind Kufen 33 (Fig. 8), die halbschalenförmig ausgeführt sind, an den Erdkabeln 30 angeordnet. Das Bohrloch 102 wird dann mit Flüssigboden oder Bentonit 34 oder dgl. gefüllt, um eine adäquate Wärmeübertragung bereitzustellen. Alternativ zu den Kufen 33 kann auch eine Beschichtung 35 als Schutz vorgesehen werden, die beispielsweise bereits werksseitig auf die Kabel 30 aufgebracht ist.

Wird eine Schutzverrohrung 31 eingebracht, in die dann die Erdkabel eingebracht werden, so kann diese auf verschieden Weise erstellt werden.

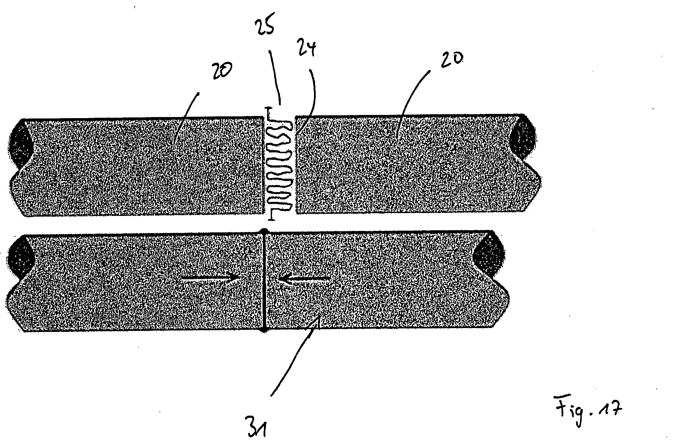

Fig. 17 zeigt dabei, dass die Schutzverrohrung 31 aus einzelnen Schutzrohren 20 erstellt wird, indem diese stumpf verschweißt werden. Dabei werden die Schutzrohre 20 axial ausgerichtet, die Stöße 24 ggf. plan gehobelt und mit einem Heizelement 25 erwärmt und aneinandergepresst.

Alternativ kann die Schutzverrohrung 31 vor Ort aus Flachmaterial hergestellt werden. Hierfür ist eine entsprechende Vorrichtung (nicht dargestellt) notwendig.

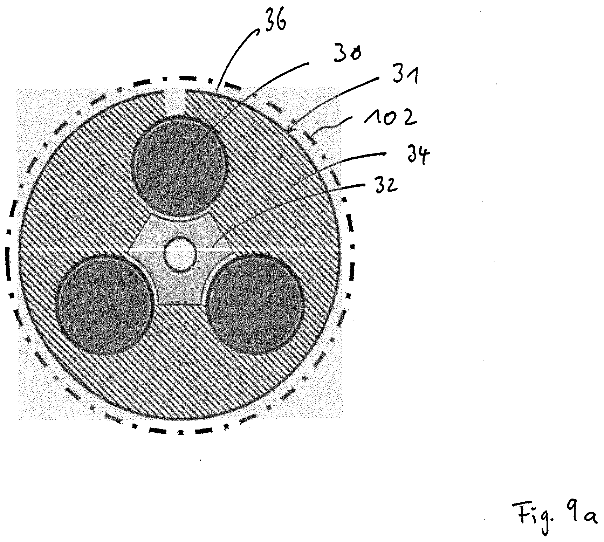

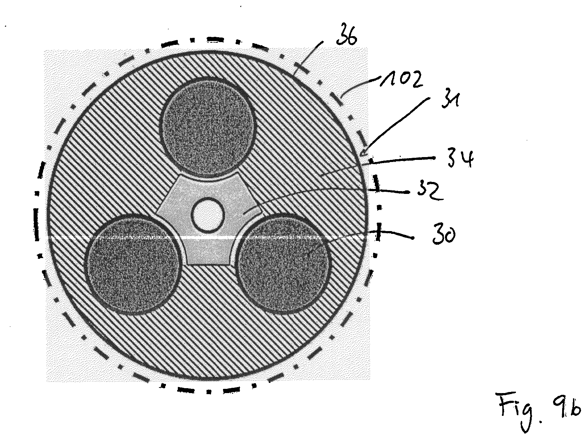

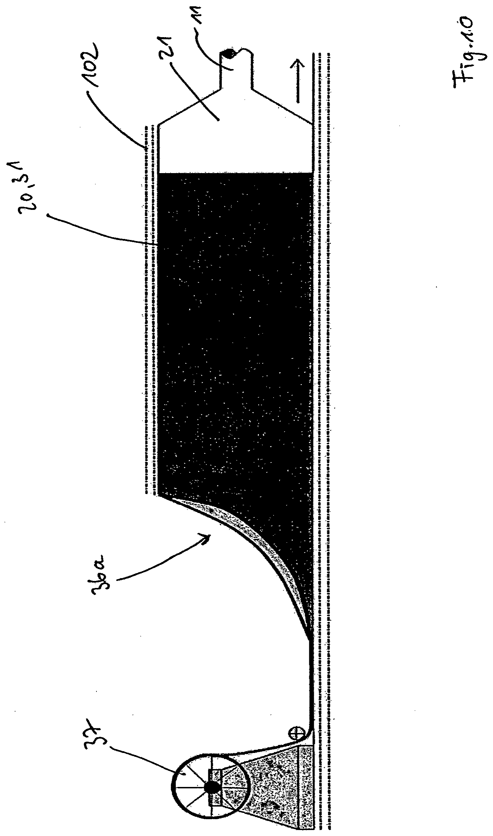

Fig. 9a zeigt dabei ein offenes Rohr 36 als Schutzverrohrung 31, das aus einem Flachmaterial 37 vor Ort gebogen und direkt ins Bohrloch 102 eingebracht wird. In diese wird dann das Kabelpaket eingebracht und das Rohr wird im Boden mit Flüssigboden oder Bentonit 34 oder dgl. gefüllt. Bei dem in Fig. 9b dargestellten Schutzrohr wird das Flachmaterial noch zusätzlich zu einem Rohr verbunden, beispielsweise durch Schweißen, Kleben, Stecken etc.. Die Herstellung selber ist schematisch in Fig. 10 dargestellt. Das aufgetrommelte Flachmaterial 37 wird über eine Matrize 36a gebogen und ggf. verbunden.

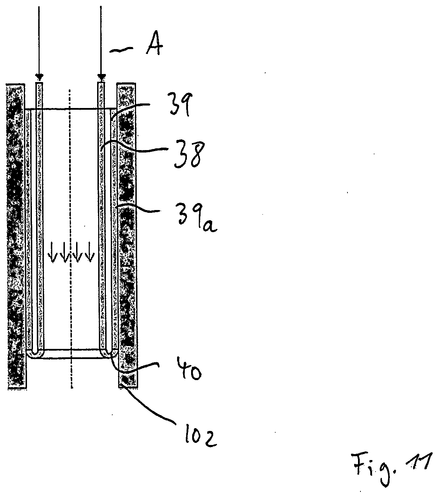

Fig. 11 zeigt eine weitere Variante. Dabei wird ein geschlossenes Rohr 20, 31 durch Umstülpen erzeugt. Beispielsweise wird aus einem Flachmaterial 37, insbesondere aus Kunststoff, ein Rohr 38 erzeugt. Das in das Bohrloch 102 eingebracht wird, in dem es in Pfeilrichtung A eingeschoben wird. Der Anfang 39 des Rohres 38 wird umgestülpt befestigt, wodurch ein äußeres Rohr 39a erzeugt wird, dass am Bohrloch 102 anliegt. Die Umstülpzone 40 wandert dabei durch vorschieben des inneren Rohres 38 in das Bohrloch hinein, wodurch eine Verrohrung 31 erzeugt wird.

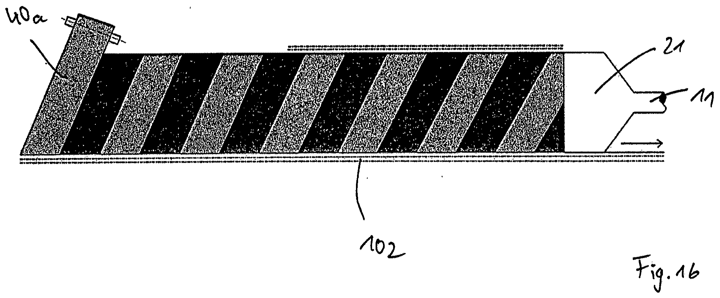

Eine weitere Variante der Vorortherstellung der Schutzverrohrung aus Flachmaterial ist in Fig. 16 gezeigt. Dabei wird die Schutzverrohrung aus Streifen 40a spiralförmig zusammengeschweißt, während es in das Bohrloch 102 eingezogen wird.

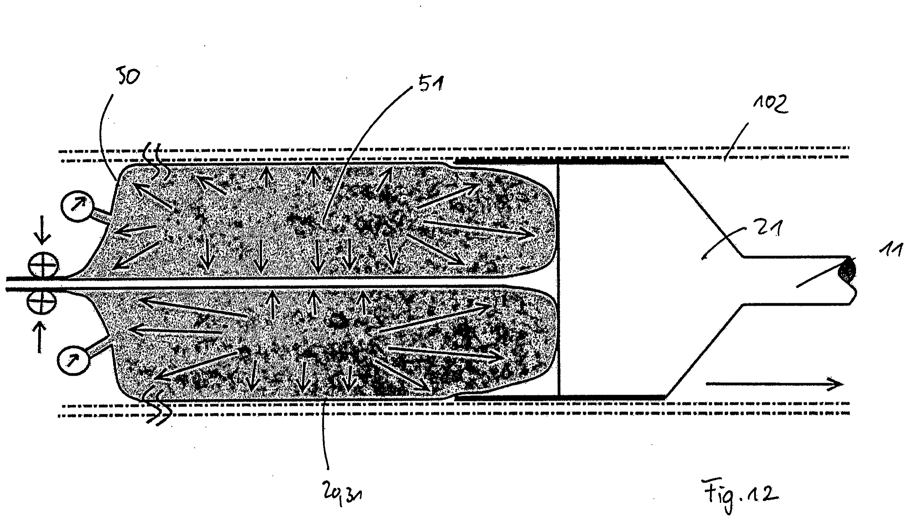

Fig. 12 zeigt das Herstellen der Schutzverrohrung 31 aus einem Schlauch. Ein beispielsweise mit Kunstharz getränkter Kunststoffschlauch 50 wird in das Bohrloch 102 eingestülpt. Der umgekrempelte Schlauch 50 wird mit kaltem Wasser 51 befüllt, wodurch sich der Schlauch 50 selbst in das Bohrloch 102 zieht und sich formschlüssig an das Bohrloch 102 anlegt. Das Harz härtet dann anschließend durch Zugabe von Warmwasser in einer exothermen Reaktion aus.

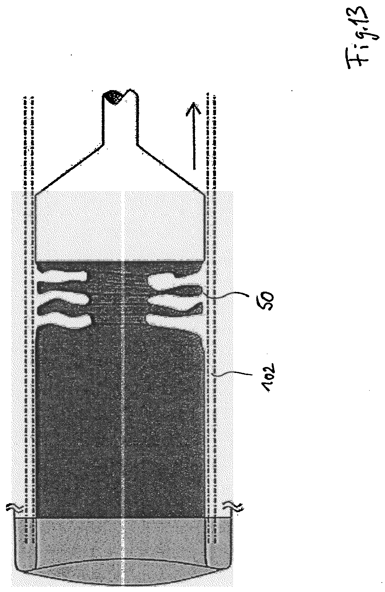

Alternativ dazu ist in Fig. 13 ein axial zusammengefalteter Schlauch 50 gezeigt, der beim Einziehen in das Bohrloch am Beginn des Bohrlochs 102 unter Spannung gehalten wird und sich dann im Bohrloch zur Schutzverrohrung entfaltet. Ggf. muss noch wie zuvor geschildert eine Härtung durchgeführt werden.

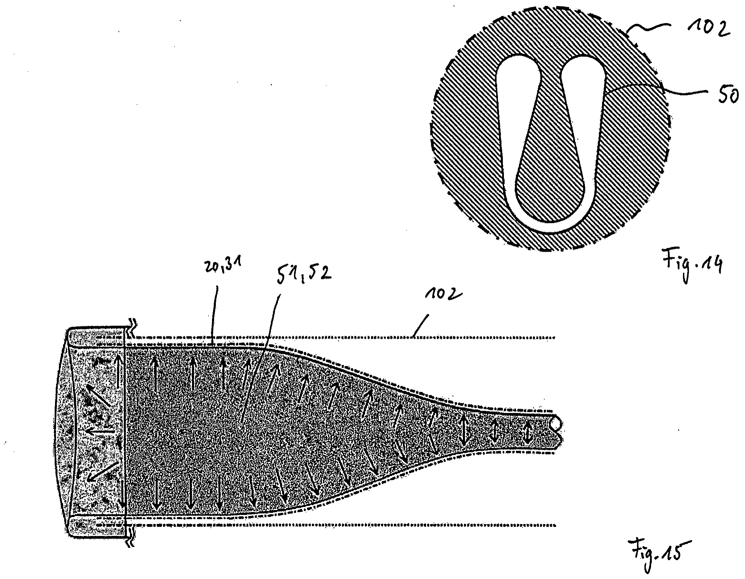

In Fig. 14 und Fig. 15 ist eine weitere Möglichkeit des Einbringens einer Schutzverrohrung gezeigt. Dabei wird ein Rohr 50, dass in radialer Richtung gefaltet ist, in das Bohrloch 102 eingebracht. Anschließend wird es mit Waser 51 oder mit Dampf 52 unter Druck gesetzt, so dass es sich an das zur Schutzverrohrung 31 aus der radialen Faltung aufweitet.

**Bezugszeichenliste**

| | | | |
|---|---|---|---|
| 10 | HDD-Bohrgerät | 39a | äußeres Rohr |
| 11 | Bohrgestänge | 40 | Umstülpzone |
| 12 | Vortriebskopf | 40a | Streifen |
| 13 | Aufweitungsbohrkopf | 41 | Verdrängungsbohrkopf |
| 14 | Casing | 42 | Hammerelement |
| 15 | Bohrhammer | 43 | Bohrkopfabschnitt |
| 16 | Verdrängungsschnecke | 44 | Auslassdüse |
| 17 | Zwischenraum | 45 | Schmiermittelauslass |
| 18 | Bohrkopfsystem | 46 | Rotationskopf |
| 19 | Bohrwerkzeug | 47 | Steuerelement |
| 20 | Schutzrohr | | |
| 21 | Verbindungselement | 50 | Kunststoffschlauch |
| 22 | Bohrwerkzeugantrieb | 51 | kaltes Wasser |
| 23 | Strahlpumpe | 52 | Dampf |
| 24 | Stoß | | |
| 25 | Heizelement | 100 | Startpunkt |
| | | 101 | Trasse |
| 30 | Erdkabel | 102 | Bohrloch |
| 31 | Schutzverrohrung | | |
| 32 | Abstandshalter | 110 | Zielpunkt |
| 33 | Kufe | | |
| 34 | Bentonit | 120 | Bohrspülung |
| 35 | Beschichtung | 121 | Ringraum |
| 36 | Rohr | 123 | Gemisch |
| 36a | Matrize | A | Pfeilrichtungen |
| 37 | Flachmaterial | | |
| 38 | Rohr | | |
| 39 | Anfang | | |

## Patentansprüche

1. System zum oberflächennahen Verlegen von Erdkabeln oder Erdleitungen im Boden in einem Bohrloch (102) entlang einer Verlegetrasse (101) zwischen einem Startpunkt (100) und einem Zielpunkt (110) mit einem Bohrgerät (10), mit einem Vortriebskopf (12) zum Erstellen des Bohrloches (102), mit einem Bohrgestänge (11) und/oder einem Casing (14), wobei der Durchmesser des Vortriebskopfs (12) größer ist als der Durchmesser des Casings (14) oder des Bohrgestänges (11), so dass ein Ringraum (121) zwischen Bohrlochwandung (102) und Casing (14) oder Bohrgestänge (11) entsteht, wobei der Ringraum (121) mit einer Schmierung versehen ist, wobei es sich bei dem Vortriebskopf (12) um ein Bohrkopfsystem (18) aus Bohrwerkzeug (19) und Bohrwerkzeugantrieb (22) zum Lösen des Bodens handelt, und wobei ein Spülungskreislauf vorgesehen ist, mit dem der von dem Bohrkopfsystem (18) gelöste Boden aus dem Bohrloch (102) abförderbar ist, wobei für den Abtransport des gelösten Bodens im Spülungskreislauf eine Strahlpumpe (23) als Bestandteil des Bohrkopfsystems (18) vorgesehen ist, und dass während oder bevor das Bohrgestänge (11) und/oder Casing (14) aus dem Bohrloch (102) entnommen werden in das Bohrloch Erdkabel (30), Erdleitungen oder ein Schutzrohr (20, 31), in das die Erdkabel (30) oder Erdleitungen einbringbar sind, einbringbar sind.

2. System nach Anspruch 1, **dadurch gekennzeichnet, dass** es sich bei dem Bohrwerkzeugantrieb (22) um einen Elektromotor oder um einen Mudmotor oder um einen Gestängeantrieb handelt.

3. System nach Anspruch 1 oder 2, **dadurch gekennzeichnet, dass** es sich bei dem Bohrgerät (10) um ein Bohrgerät einer HDD-Bohranlage oder um eine Vorschubeinheit handelt.

4. System nach einem der Ansprüche 1 bis 3, **dadurch gekennzeichnet, dass** mit dem Spülungskreislauf der der Vortriebskopf (12) antreibbar und/oder steuerbar ist.

5. System nach einem der Ansprüche 1 bis 4, **dadurch gekennzeichnet, dass** wenigstens ein Abgabepunkt (44, 45) zur Abgabe von Spülungsflüssigkeit, als Schmierung vorgesehen ist.

6. System nach einem der Ansprüche 1 bis 5, **dadurch gekennzeichnet, dass** das Schutzrohr (20, 31) aus einem Schlauch, aus Flachmaterial (37), aus Flachmaterial (37) aus Kunststoff, aus Rohrschüssen (20), oder aus Rohrschüssen (20) aus Kunststoff, vor Ort erstellbar ist.

7. Verfahren zum oberflächennahen Verlegen von Erdkabeln oder Erdleitungen im Boden in einem Bohrloch (102) entlang einer Verlegetrasse (101) zwischen einem Startpunkt (100) und einem Zielpunkt (110) mit einem System nach einem der Ansprüche 1 bis 6 bei dem ein Vortriebskopf (12) entlang der Verlegetrasse (101) bewegt wird, indem mit einem Bohrgerät (10) ein Vorschub über ein Bohrgestänge (11) oder ein Casing (14) oder ein Vorschub und eine Rotation über ein Bohrgestänge (11) auf den Vortriebskopf (12) übertragen wird, wobei das Bohren oberflächennah erfolgt, das der Boden mit dem Vortriebskopf (12) oberflächennah mit einem Bohrkopfsystem (18) aus Bohrwerkzeug (19) und Bohrwerkzeugantrieb (22) gelöst und entnommen wird, so dass zwischen einer Bohrlochwandung (102) und dem Casing (14), dem Bohrgestänge (11) und/oder einem Schutzrohr (20, 31) ein Ringraum (102) entsteht, dass in dem Ringraum (102) eine Schmierung vorgesehen wird, dass ein Spülungskreislauf für ein Spülungsmedium vorgesehen wird, über den der gelöste Boden aus dem Bohrloch (102) mit einer Strahlpumpe abgefördert wird, und dass während oder bevor das Bohrgestänge (11) und/oder Casing (14) aus dem Bohrloch (102) entnommen werden in das Bohrloch Erdkabel (30), Erdleitungen oder ein Schutzrohr (20, 31), in das die Erdkabel (30) oder Erdleitungen einbringbar sind, eingebracht werden.

8. Verfahren nach Anspruch 7, **dadurch gekennzeichnet, dass** über den Spülungskreislauf der Vortriebskopf (12) angetrieben und/oder gesteuert wird.

9. Verfahren nach Anspruch 7 oder 8, **dadurch gekennzeichnet, dass** die Zufuhr und die Abfuhr des Spülungsmediums im Spülungskreislauf über ein doppelwandig ausgeführtes Bohrgestänge (11) erfolgt.

## Claims

1. System for laying underground cables or underground pipelines in the ground near the surface in a borehole (102) along an installation route (101) between a starting point (100) and a target point (110) with a drill device (10), having a driving head (12) for creating the borehole (102), having a drill pipe (11) and/or a casing (14), wherein the diameter of the driving head (12) is greater than the diameter of the casing (14) or the drill pipe (11), so that an annular space (121) is created between the borehole wall (102) and the casing (14) or drill pipe (11), wherein the annular space (121) is provided with lubrication, wherein the driving head (12) is a drill head system (18) consisting of drilling tool (19) and drilling tool drive (22) for loosening the soil, and wherein provided is a flushing circuit by which the soil dissolved by the drill head system (18) is able to be discharged from the borehole (102), wherein a jet pump (23) is provided as a component of the drill head system (18) for the discharge of the dissolved soil in the flushing circuit, and underground cables (30), underground lines or a protective tube (20, 31), into which the underground cables (30) or underground lines are insertable, are insertable into the borehole while or before the drill pipe (11) and/or casing (14) are/is removed from the borehole (102).

2. System according to Claim 1, **characterized in that** the drilling tool drive (22) is an electric motor or a mud motor or a pipe drive.

3. System according to Claim 1 or 2, **characterized in that** the drill device (10) is a drill device of an HDD drilling rig or a feed unit.

4. System according to one of Claims 1 to 3, **characterized in that** the driving head (12) is able to be driven and/or controlled by the flushing circuit.

5. System according to one of Claims 1 to 4, **characterized in that** at least one dispensing point (44, 45) is provided for dispensing flushing liquid as lubrication.

6. System according to one of Claims 1 to 5, **characterized in that** the protective tube (20, 31) is able to be produced on site from a hose, from flat material (37), from flat material (37) made of plastic, from cylindrical pipe sections (20), or from cylindrical pipe sections (20) made of plastic.

7. Method for laying underground cables or underground pipes in the ground near the surface in a borehole (102) along an installation route (101) between a starting point (100) and a target point (110) with a system according to one of Claims 1 to 6, in which a driving head (12) is moved along the installation route (101) in that a feed by way of a drill pipe (11) or a casing (14), or a feed and rotation by way of a drill pipe (11), is transmitted to the driving head (12) by a drill device (10), wherein the drilling is carried out near the surface, the soil while using the driving head (12) is loosened and removed near the surface with a drill head system (18) consisting of a drilling tool (19) and a drilling tool drive (22), so that an annular space (102) is created between a borehole wall (102) and the casing (14), the drill pipe (11) and/or a protective tube (20, 31), that lubrication is provided in the annular space (102), provided is a flushing circuit for a flushing medium by way of which the dissolved soil from the borehole (102) is discharged with a jet pump, and underground cables (30), underground lines or a protective tube (20, 31), into which the underground cables (30) or underground lines are insertable, are insertable into the borehole while or before the drill pipe (11) and/or casing (14) are/is removed from the borehole (102).

8. Method according to Claim 7, **characterized in that** the driving head (12) is driven and/or controlled by way of the flushing circuit.

9. Method according to Claim 7 or 8, **characterized in that** the supply and discharge of the flushing medium in the flushing circuit is carried out by way of a double-walled drill pipe (11).

## Revendications

1. Système pour la pose proche de la surface de câbles souterrains ou de conduites souterraines dans le sol, dans un trou de forage (102) le long d'un tracé de pose (101) entre un point de départ (100) et un point cible (110) à l'aide d'un appareil de forage (10), pourvu d'une tête de creusement (12) destinée à réaliser le trou de forage (102), d'une tige de forage (11) et/ou d'un carter (14), le diamètre de la tête de creusement (12) étant supérieur au diamètre du carter (14) ou de la tige de forage (11), de telle sorte qu'un espace annulaire (121) se forme entre la paroi (102) du trou de forage et le carter (14) ou la tige de forage (11), l'espace annulaire (121) étant pourvu d'une lubrification, la tête de creusement (12) étant un système (18) de tête de forage constitué d'un outil de forage (19) et d'un entraînement (22) d'outil de forage et destiné à dégager le sol, et un circuit de rinçage étant prévu avec lequel le sol dégagé par le système (18) de tête de forage peut être évacué du trou de forage (102), une pompe à jet (23) étant prévue comme composant du système (18) de tête forage pour le transport du sol dégagé dans le circuit de rinçage et, pendant ou avant le retrait de la tige de forage (11) et/ou du carter (14) du trou de forage (102), des câbles souterrains (30), des conduites souterraines ou un tube de protection (20, 31), dans lequel les câbles souterrains (30) ou les conduites souterraines peuvent être introduits, étant introduits dans le trou de forage.

2. Système selon la revendication 1, **caractérisé en ce qu'**il s'agit, pour l'entraînement (22) d'outil de forage, d'un moteur électrique ou d'un moteur de boue ou d'un entraînement par tringlerie.

3. Système selon la revendication 1 ou 2, **caractérisé en ce qu'**il s'agit, pour l'appareil de forage (10), d'un appareil de forage d'une installation de forage HDD (par forage horizontal dirigé) ou d'une unité d'avancement.

4. Système selon l'une des revendications 1 à 3, **caractérisé en ce que** la tête de creusement (12) peut être entraînée et/ou commandée par le circuit de rinçage.

5. Système selon l'une des revendications 1 à 4, **caractérisé en ce qu'**au moins un point de distribution (44, 45) pour la distribution de liquide de rinçage, en tant que lubrification, est prévu.

6. Système selon l'une des revendications 1 à 5, **caractérisé en ce que** le tube de protection (20, 31) peut être réalisé sur place à partir d'un tuyau flexible, à partir de matériau plat (37), à partir de matériau plat (37) en matériau synthétique, à partir de tronçons tubulaires (20) ou à partir de tronçons tubulaires (20) en matériau synthétique.

7. Procédé pour la pose proche de la surface de câbles souterrains ou de conduites souterraines dans le sol, dans un trou de forage (102) le long d'un tracé de pose (101) entre un point de départ (100) et un point cible (110) à l'aide d'un système selon l'une des revendications 1 à 6, dans lequel une tête de creusement (12) est déplacée le long du tracé de pose (101), en ce qu'un appareil de forage (10) transmet un avancement par l'intermédiaire d'une tige de forage (11) ou d'un carter (14) ou un avancement et une rotation par l'intermédiaire d'une tige de forage (11) sur la tête de creusement (12), le forage ayant lieu à proximité de la surface, le sol étant dégagé et retiré à l'aide de la tête de creusement (12) à proximité la surface à l'aide d'un système (18) de tête de forage constitué d'un outil de forage (19) et d'un entraînement (22) d'outil de forage de telle sorte qu'un espace annulaire (102) se forme entre une paroi (102) de trou de forage et le carter (14), la tige de forage (11) et/ou un tube de protection (20, 31), une lubrification étant prévue dans l'espace annulaire (102), un circuit de rinçage pour un milieu de rinçage étant prévu, par l'intermédiaire duquel le sol dégagé du trou de forage (102) est évacué à l'aide d'une pompe à jet et, pendant ou avant le retrait de la tige de forage (11) et/ou du carter (14) du trou de forage (102), des câbles souterrains (30), des conduites souterraines ou un tube de protection (20, 31), dans lequel les câbles souterrains (30) ou les conduites souterraines peuvent être introduits, étant introduits dans le trou de forage.

8. Procédé selon la revendication 7, **caractérisé en ce que** la tête d'avancement (12) est entraînée et/ou commandée par l'intermédiaire du circuit de rinçage.

9. Procédé selon la revendication 7 ou 8, **caractérisé en ce que** l'alimentation en milieu de rinçage dans le circuit de rinçage et son évacuation sont effectuées par l'intermédiaire d'une tige de forage (11) conçue à double paroi.
